# EUROPEAN PATENT APPLICATION

(11) **EP 2 530 063 A2**
(43) Date of publication of application: **05.12.2012**
(21) Application number: 12169772.6
(22) Date of filing: 29.05.2012
(51) Int. Cl.: C04B 41/89, C23C 4/10, F01D 5/28

(54) **Composite article having silicate barrier layer and method therefor**

(30) Priority: 31.05.2011 US 201113149515
(71) Applicant: United Technologies Corporation, Hartford, CT 06101 (US)
(72) Inventor: Sheedy, Paul, Vernon, CT 06066 (US); Lawton, Thomas H., Wethersfield, CT 06109 (US); Werkheiser, William, East Hartford, CT 06118 (US); Kashyap, Tania Bhatia, Middletown, CT 06457 (US)
(74) Representative: Hull, James Edward

(57) **Abstract**

A method of processing a composite article includes controlling a preheat temperature of a workpiece to be less than 700°C/1292°F. The workpiece includes a substrate (22) and a bond coat (24) that is disposed on the substrate (22). With the workpiece at the preheat temperature, deposition of a barrier layer (28) onto the bond coat (24) is commenced. The barrier layer (28) includes a rare earth silicate material having a rare earth element selected from lanthanide series elements, yttrium, scandium and combinations thereof.

## Description

### BACKGROUND

This disclosure relates to composite articles such as those used in gas turbine engines. Components, such as gas turbine engine components, may be subjected to high temperatures, corrosive and oxidative conditions, and elevated stress levels. In order to improve the thermal and oxidative stability of these components, the component may include an environmental barrier, oxidative barrier or thermal barrier coating. The barrier coating may be a multi-layer coating that includes a top coat and a bond coat beneath the top coat to adhere the top coat to the underlying substrate.

### SUMMARY

Disclosed is a method of processing a composite article that includes controlling a preheat temperature of a workpiece to be less than 700°C/1292°F. The workpiece includes a substrate and a bond coat that is disposed on the substrate. With the workpiece at the preheat temperature, deposition of a barrier layer onto the bond coat is commenced. The barrier layer includes a rare earth silicate material having a rare earth element selected from lanthanide series elements, yttrium, scandium and combinations thereof.

In another aspect, a method of processing a composite article includes a workpiece having a substrate and a bond coat that is disposed on the substrate. The method includes a deposition process that comprises any preparation of the workpiece for deposition of a barrier layer of a barrier coating system onto the bond coat, commencement of deposition of the barrier layer and deposition of the barrier layer. The preparation of the workpiece for deposition is free of any preheating of the workpiece prior to the commencement of deposition.

Also disclosed is a composite article that includes a substrate, a bond coat on the substrate, and a barrier coating system on the bond coat. The barrier coating system includes a barrier layer. The barrier layer comprises a rare earth silicate material that includes a rare earth element selected from lanthanide series elements, yttrium, scandium and combinations thereof.

The various features and advantages of the disclosed examples will become apparent to those skilled in the art from the following detailed description. The drawings that accompany the detailed description can be briefly described as follows.

### BRIEF DESCRIPTION OF THE DRAWINGS

Figure 1 schematically illustrates an example composite article.
Figure 2 schematically illustrates a cross-section of a portion of a composite article.
Figure 3 illustrates an example method of processing a composite article.

### DETAILED DESCRIPTION

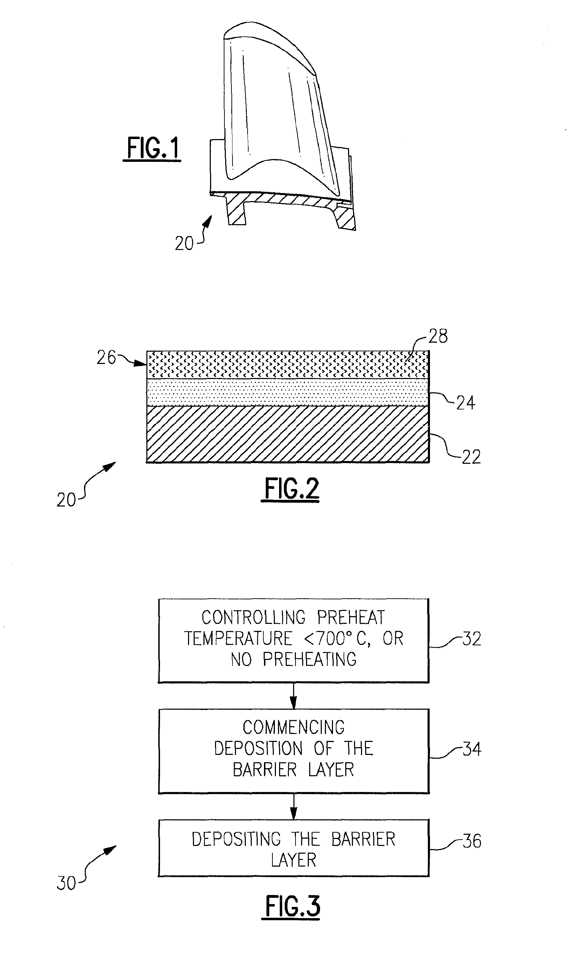

Figure 1 shows a composite article 20. In this example, the composite article 20 is a turbine blade for a gas turbine engine, although this disclosure it not limited to such components. The composite article 20 may alternatively be a turbine vane, a combustor liner, compressor blade or vane, blade outer air seal or other component that would benefit from this disclosure. It is also to be understood that the composite article 20 is not limited to components that are used for gas turbine engines and that components in other fields will also benefit from this disclosure.

Figure 2 shows a cross-section of a portion of the composite article 20. As an example, the portion may be from the airfoil-shaped blade section of the turbine blade. The composite article 20 includes a substrate 22, a bond coat 24 on the substrate 22 and a barrier coating system 26 on the bond coat 24. In that regard, the composite article 20 is a composite of at least the substrate 22, the bond coat 24 and the barrier coating system 26. For example, the substrate 22 is a material selected from ceramics, glasses and glass ceramics, metals (e.g., nickel or cobalt based superalloys), carbon, and combinations thereof. In a further example, the substrate 22 comprises a silicon-containing material.

The barrier coating system 26 may include one or more barrier layers for protecting the underlying substrate 22 from the operational environment of the composite article 20. In particular, silicon-containing materials are vulnerable to degradation at elevated temperatures in the presence of moisture, such as in the operation environment of a gas turbine engine. In the illustrated example, the barrier coating system includes at least one barrier layer 28 for protecting the underlying silicon-containing material or other material from environmental degradation. It is to be understood that additional barrier layers may be provided on top of the illustrated example barrier layer 28, or alternatively between the illustrated example barrier 28 and the bond coat 24.

As will be described, the barrier layer 28 of the barrier coating system 26 includes a material that can be deposited onto the bond coat 24 at relatively low processing temperatures to obtain a high quality barrier layer 28 that provides the required durability and reduces the processing complexity and cost of the composite article 20.

In the illustrated example, the silicon-containing material of the substrate 22 comprises a silicon-containing ceramic material. For example, the silicon-containing ceramic material may include silicon carbide, silicon nitride, silicon carbonitride, silicon oxycarbide, silicates, silicon oxynitride, or other oxide, carbide, nitride, boride or combination thereof that includes silicon.

The substrate 22 may be monolithic (i.e., formed of a single, continuous mass of material or materials) or a composite of several different materials including ceramics, glasses and glass ceramics, metals, carbon, and combinations thereof. In one example, the substrate 22 is a ceramic matrix composite, wherein a first ceramic material forms a continuous matrix phase in which a second material is dispersed. The second phase may be continuous or discontinuous and may comprise the same or different ceramic or silicon-containing ceramic material as the ceramic matrix (for example, a silicon carbide fiber in a silicon carbide matrix).

The bond coat 24 includes silicon, either in metallic or non-metallic form. That is, the silicon may be in the form of a silicon-containing ceramic material, such as a silicate, or in metallic silicon form, such as substantially pure silicon metal or as a silicide. In one example, the bond coat 24 is silicon metal. It is to be understood that the example materials given for the substrate 22, the bond coat 24 and the barrier layer 28 may be constituents in the respective compositions of the substrate 22, bond coat 24 and barrier layer 28 or may entirely compose the respective compositions of the substrate 22, bond coat 24 and barrier layer 28 to the exclusion of other materials in the compositions, with the exception of trace impurities.

In the illustrated example, the barrier layer 28 of the barrier coating system 26 includes a rare earth silicate material. The rare earth silicate material includes a rare earth element that is selected from lanthanide series elements in the Periodic Table (element numbers 57 to 71), yttrium, scandium and combinations thereof. In a further example, the rare earth element is selected from yttrium, gadolinium, lutetium, ytterbium and combinations thereof. In yet a further example, the rare earth element is yttrium, to the exclusion of all other rare earth elements. In one example, the yttrium silicate of the barrier layer 28 includes yttrium disilicate (Y2Si2O7) or yttrium monosilicate (Y2SiO5) or combinations thereof.

As indicated above, the use of rare earth silicate material for the barrier layer 28 allows the composite article 20 to be processed at relatively low temperatures. As an example, Figure 3 shows a method 30 of processing or manufacturing the composite article 20. In the illustrated example, the method 30 includes a controlling step 32, a commencing step 34 and a depositing step 36.

In the method 30, the barrier layer 28 is deposited onto a workpiece that includes the substrate 22 and the bond coat 24. The controlling step 32 refers to any preheating of the workpiece prior to commencement of deposition of the barrier layer 28 in the commencing step 34. For instance, the controlling step 32 includes controlling a preheat temperature of a workpiece to be less than 700°C/1292°F. The controlling of the preheat temperature may be conducted within a coating chamber that is used to deposit the barrier layer 28 or within a preheat chamber that is separate from the coating chamber used to deposit the barrier layer 28. In some examples, the preheating is conducted within a kiln/furnace, with a torch or with the deposition equipment (e.g. plasma spray gun) within a coating chamber. Atmosphere is generally not controlled and is typically ambient air.

Alternatively, the method 30 and deposition process are free of any preheating step or steps, such that the workpiece is at a temperature of approximately 20-40°C upon commencement of deposition of the barrier layer 28. Other treatments prior to deposition that involve the application of heat are not excluded, such as thermal treatments to produce thermally grown oxides, as long as the workpiece is at a temperature of approximately 20-40°C upon commencement of deposition of the barrier layer 28.

After control of the preheat temperature to be less than 700°C/1292°F, or approximately room temperature if no preheating is used, the deposition of the barrier layer 28 is commenced. That is, the material of the barrier layer 28 is initially deposited onto the bond coat 24. In the deposition step 36, the deposition of the barrier layer 28 material continues until the barrier layer 28 achieves a desired predetermined thickness, which may be between several micrometers and a few millimeters.

In one example, the depositing of the barrier layer 28 is conducted using thermal spraying of a powder starting material. The process of thermal spraying may increase the temperature of the workpiece from the initial preheat temperature or room temperature, if no preheating is used. The relatively low starting preheat temperature or room temperature if no preheating is used, reduces the cost and complexity of the process and results in a high quality barrier layer 28. For instance, the low starting preheat temperature or room temperature if no preheating is used, reduces or eliminates the concern of uniformly heating the workpiece to achieve a desired coating quality. There is also greater overall flexibility in the process because the coating quality does not depend on heating the workpiece to a specific, elevated temperature.

In the illustrated example, the starting powder material of the deposition process may be selected to facilitate achievement of the high quality barrier layer 28. Using yttrium as an example of the rare earth element used in the barrier layer 28, the starting powder material includes at least 50 wt.% of yttrium disilicate. The selection of the powder material to include this amount of yttrium disilicate achieves a desirable phase composition in the barrier layer 28. That is, yttrium silicates can phase separate and form yttria (Y2O3) upon deposition of the barrier layer 28, which is undesirable for achieving a high quality barrier layer 28 as well as thermal expansion matching between the barrier layer 28 and the silicon-containing material of the substrate 22. In that regard, using at least 50 wt.% of yttrium disilicate, in the starting powder material, with the remainder being yttrium monosilicate, limits the amount of yttria that is produced in the barrier layer 28 to an acceptable level. Additionally, the starting powder material never includes a remainder of more than 50 wt.% of yttrium monosilicate.

In a further example, the amount of yttrium disilicate in the starting powder material is between 70 to 100 wt.%, and includes up to 30 wt.% of silicon dioxide. Thus, the starting powder material may include a ratio of yttrium disilicate/yttrium monosilicate between 100/0 and 50/50 or 50-100 wt.% yttrium disilicate and remainder of up to 50 wt.% of yttrium monosilicate. The starting powder may also include a ratio of yttrium disilicate/silicon dioxide between 100/0 and 70/30, or 70-100 wt.% yttrium disilicate, and up to 30 wt.% of silicon dioxide.

In the illustrated example of the method 30, the starting powder material also has an average powder particle size that is selected to reduce formation of the undesired yttria in the barrier layer 28. In one example, the average powder particle size is in a range of 1-150 micrometers. In a further example, at least 90% of the powder particles of the starting powder material have a size of less than 45 micrometers. The given example powder sizes facilitate the reduction of the controlling heat treatment temperature 32 in forming the barrier layer 28.

In one example, the thermal spray process utilizes argon and hydrogen gas, with a plasma power of 25-42 kilowatts, a standoff distance from 2.4-6 inches (6.1-15.24 centimeters), and a spray rate of 0.1-2 mils/pass (2.54-50.8 micrometers/pass). In a further example, the plasma power is 30-36 kilowatts, the standoff is about 3.6-4.8 inches (9.14-12.2 centimeters) and the deposition rate is 0.5-1.0 mils/pass (12.7-25.4 micrometers/pass). Given this description, one of ordinary skill in the art will recognize suitable thermal spray parameters to meet their particular needs. It is to be understood that the disclosed thermal spray parameters may be varied and are not limited to the given examples.

In comparison, deposition processes of other barrier layers utilize a preheating step to heat the workpiece to a temperature in excess of approximately 1100°C/2012°F in order to obtain crack-free barrier layers. The composite article 20 and method 30 described herein, recognize that the specific barrier layer material of rare earth silicate materials may be used and deposited at much lower temperatures, and even at room temperature, to produce a suitable barrier layer 28.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A method of processing a composite article (20), the method comprising:
controlling a preheat temperature of a workpiece to be less than 700°C/1292°F, the workpiece including a substrate (22) and a bond coat (24) that is disposed on the substrate (22);
with the workpiece at the preheat temperature, commencing deposition of a barrier layer (28) of a barrier coating system (26) onto the bond coat (24); and
depositing the barrier layer (28), the barrier layer (28) comprising a rare earth silicate material that includes a rare earth element selected from a group consisting of lanthanide series elements, yttrium, scandium and combinations thereof.

2. The method as recited in claim 1, including controlling the preheat temperature of the workpiece to be less than 350°C/662°F, or optionally less than 100°C/212°F.

3. The method as recited in claim 1 or 2, wherein the rare earth element is selected from a group consisting of yttrium, gadolinium, lutetium, ytterbium and combinations thereof.

4. The method as recited in any of claims 1 to 3, wherein the bond coat (24) includes silicon or silicon metal.

5. The method as recited in any preceding claim, wherein the substrate (22) is a ceramic material.

6. The method as recited in any preceding claim, wherein the depositing of the barrier layer (28) includes deposition using thermal spraying of a powder material.

7. The method as recited in claim 6, wherein the powder material includes at least 50 wt.% of yttrium disilicate, and optionally no more than 50 wt.% of yttrium monosilicate.

8. The method as recited in claim 6 or 7, wherein the powder material includes up to 30 wt. % of silicon dioxide.

9. The method as recited in any of claims 6 to 8, wherein the powder material has an average powder particle size of 1-150 micrometers, and optionally wherein at least 90% of the particles of the powder material have a size less than 45 micrometers.

10. A method of processing a composite article (20), the method comprising:
a workpiece that includes a substrate (22) and a bond coat (24) that is disposed on the substrate (22); and
a deposition process that includes any preparation of the workpiece for deposition of a barrier layer (28) of a barrier coating system (26) onto the bond coat (24), commencement of deposition of the barrier layer (28) and deposition of the barrier layer (28), and the preparation of the workpiece for deposition is free of any preheating of the workpiece prior to the commencement of deposition.

11. The method as recited in any preceding claim, wherein the workpiece is at a temperature of approximately 20-40°C (68-104°F) upon commencement of deposition of the barrier layer (28).

12. The method as recited in any preceding claim, wherein the workpiece comprises a silicon-containing material and/or a metallic material.

13. A composite article (20) comprising:
a substrate (22);
a bond coat (24) on the substrate (22); and
a barrier coating system (26) on the bond coat (24), the barrier coating system (26) including a barrier layer (28) comprising a rare earth silicate material that includes a rare earth element selected from a group consisting of lanthanide series elements, yttrium, scandium and combinations thereof.

14. The composite article (20) as recited in claim 13, wherein the rare earth element is selected from a group consisting of yttrium, gadolinium, lutetium, ytterbium and combinations thereof.

15. The composite article (20) as recited in claim 13 or 14, wherein the substrate (22) comprises a silicon-containing material and the barrier layer (28) comprises yttrium disilicate.
